# EUROPÄISCHE PATENTSCHRIFT

(11) **EP 0 993 869 B1**
(45) Veröffentlichungstag und Bekanntmachung des Hinweises auf die Patenterteilung: **19.01.2005**
(21) Anmeldenummer: 99120448.8
(22) Anmeldetag: 14.10.1999
(51) Int. Cl.: B01L 3/02

(54) **Pipettiervorrichtung**
Pipetting device
Dispositif de pipettage

(30) Priorität: 17.10.1998 DE 19847869
(43) Veröffentlichungstag der Anmeldung: 19.04.2000
(73) Patentinhaber: Hirschmann Laborgeräte GmbH & Co. KG, 74246 Eberstadt (DE)
(72) Erfinder: Bigus, Hans-Jürgen Dr., D-72124Pliezhausen (DE)
(74) Vertreter: Lichti, Heiner, Dipl.-Ing.

(56) Entgegenhaltungen:
- EP-A- 0 725 267
- EP-A- 0 865 824
- LINNEMANN R ET AL: "A self-priming and bubble-tolerant piezoelectric silicon micropump for liquids and gases" MICRO ELECTRO MECHANICAL SYSTEMS, 1998. MEMS 98. PROCEEDINGS., THE ELEVENTH ANNUAL INTERNATIONAL WORKSHOP ON HEIDELBERG, GERMANY 25-29 JAN. 1998, NEW YORK, NY, USA,IEEE, US, 25. Januar 1998 (1998-01-25), Seiten 532-537, XP010270205 ISBN: 0-7803-4412-X
- ZENGERLE R ET AL: "A bidirectional silicon micropump" SENSORS AND ACTUATORS A, ELSEVIER SEQUOIA S.A., LAUSANNE, CH, Bd. 50, Nr. 1-2, August 1995 (1995-08), Seiten 81-86, XP004303517 ISSN: 0924-4247
- GRAVESEN P ET AL: "MICROFLUIDICS - A REVIEW" JOURNAL OF MICROMECHANICS & MICROENGINEERING, NEW YORK, NY, US, Bd. 3, 1993, Seiten 168-182, XP000601274 ISSN: 0960-1317

## Beschreibung

Die vorliegende Erfindung betrifft eine Pipettiervorrichtung mit zumindest einem Pipettierkanal und mit zumindest einer mit dem Pipettierkanal zusammenwirkenden Pumpeinrichtung zum Ansaugen und dosierten Abgeben von Flüssigkeit, wobei die Pumpeinrichtung aus zwei elektrisch betriebenen Mikropumpen mit jeweils einem saugseitigen Anschluß und einem druckseitigen Anschluß besteht.

Pipettiervorrichtungen besitzen in der Labortechnik ein breites Anwendungsgebiet. Für viele Nachweise, Analysen, Synthesen etc. ist eine exakte Zudosierung und/oder Entnahme von Flüssigkeiten in kleinen bis kleinsten Mengen notwendig. Wichtig ist dabei vor allem die Voreinstellbarkeit und die Reproduzierbarkeit des zudosierten Volumens sowie die Eignung zur Durchführung von Reihenversuchen.

Solche Pipettiervorrichtungen werden insbesondere als Mehrkanalpipetten eingesetzt, um eine Vielzahl von auf Titerplatten angeordneten Proben gleichzeitig versorgen zu können. Dabei werden sämtliche Pipetten beispielsweise von einem gemeinsamen Antriebsglied über je einen Kolben und ein Luftpolster betätigt und weisen die Pipettierkanäle auswechselbare Pipettierspitzen aus, die das zu dosierende Volumen aufnehmen und ausgetauscht werden können, um das Verschleppen von Kontaminationen zu vermeiden. Die Kontamination der Pipettierkanäle selbst wird durch das Luftpolster vermieden. Bei den bekannten Vorrichtungen ist insbesondere von Nachteil, daß das Pipettiervolumen aufgrund des Hubwegs des Kolbens auch bei kleinsten Kolbendurchmessern nicht beliebig minimiert werden kann. Dieses Problem besteht sowohl bei direkt betriebenen wie auch bei Luftpolster-Pipetten.

Der Aufsatz "A self-priming and bubble-tolerant piezoelectric silicon micropump for liquids and gases" von R. Linnemann, P. Woias, C.-D. Senfft und J. A. Ditterich (Microelectro Mechanical Systems, 1998, Mems. 98 Proceedings, The eleventh annual international workshop on Heidelberg, Germany, 25.-29. Jan. 1998; New York, NY, USA; IEEE, US, XPO-7803-4412-X; Seite 532-537) beschreibt eine in neuerer Zeit entwickelte Mikropumpe, welche die Möglichkeit eröffnet, sehr kleine Volumina zu fördern und diese zudem genau einzustellen, so daß eine gegenüber Hubkolbenpipetten erhöhte Präzision beim Dosieren gewährleistet ist.

Der EP 0 725 267 A2 ist eine elektrisch steuerbare Mikropipette mit den Merkmalen des Oberbegriffs des Anspruchs 1 entnehmbar. Dabei sind gemäß einer Ausführungsform zwei in Serie geschaltete Mikropumpen vorgesehen, wobei die zweite Mikropumpe als Mikrodruck- oder Mikrosaugpumpe wirkt, um das zu dosierende Flüssigkeitsvolumen bei der Probenaufnahme zu begrenzen bzw. zu vergrößern. Die Probenabgabe geschieht durch die erste Mikropumpe. Nachteilig ist, daß bei einer solchen Anordnung keine exakte Dosierung kleinster Volumina bzw. kleinster Differenzvolumina möglich ist, da das zu pipettierende Medium sowohl beim Ansaugen als auch beim Abgeben durch eine passive Mikropumpe hindurch gefördert werden muß.

Der Erfindung liegt die Aufgabe zugrunde, eine Pipettiervorrichtung vorzuschlagen, mit der unter Vermeidung der vorgenannten Nachteile beliebig kleine Volumina bei zugleich geringem Raumbedarf der Pumpeinrichtung pipettiert werden können.

Diese Aufgabe wird bei einer Pipettiervorrichtung der eingangs genannten Art erfindungsgemäß dadurch gelöst, daß die Mikropumpen parallel angeordnet werden, wobei eine Mikropumpe saugseitig mit dem Pipettierkanal und druckseitig mit der Umgebung in Verbindung steht, während die andere Mikropumpe druckseitig mit dem Pipettierkanal und saugseitig mit der Umgebung in Verbindung steht.

Mit der parallelen Anordnung von zwei Mikropumpen, von denen die eine saugseitig und die andere druckseitig mit dem Pipettierkänal in Verbindung steht, ist das Fördervolumen sowohl beim Ansaugvorgang als auch beim Dosiervorgang exakt einstellbar. Dabei fördern beide Pumpen das Medium jeweils gegenläufig in nur eine Richtung und können hinsichtlich ihrer Anschlüsse entsprechend einfach aufgebaut sein. Dadurch, daßferner die eine Mikropumpe mit ihrem Druckanschluß und die andere Mikropumpe mit ihrem Sauganschluß mit der Umgebung in Verbindung steht, wird insbesondere in Verbindung das zu pipettierende Medium sowohl beim Ansaugen als ach beim Abgeben durch eine passive Mikropumpe hindurch gefördert werden muß.

Der Erfindung liegt die Aufgabe zugrunde, eine Pipettiervorrichtung vorzuschlagen, mit der unter Vermeidung der vorgenannten Nachteile beliebig kleine Volumina bei zugleich geringem Raumbedarf der Pumpeinrichtung pipettiert werden können.

Diese Aufgabe wird bei einer Pipettiervorrichtung der eingangs genannten Art erfindungsgemäß dadqrch gelöst, daß die eine Mikropumpe saugseitig mit dem Pipettierkanal und druckseitig mit der Umgebung in Verbindung steht, während die andere Mikropumpe druckseitig mit dem Pipettierkanal und saugseitig mit der Umgebung in Verbindung steht.

Mit der Anordnung von zwei Mikropumpen, von denen die eine saugseitig und die andere druckseitig mit dem Pipettierkänal in Verbindung steht, ist das Fördervolumen sowohl beim Ansaugvorgang als auch beim Dosiervorgang exakt einstellbar. Dabei fördern beide Pumpen das Medium jeweils gegenläufig in nur eine Richtung und können hinsichtlich ihrer Anschlüsse entsprechend einfach aufgebaut sein. Dadurch, daß ferner die eine Mikropumpe mit ihrem Druckanschluß und die andere Mikropumpe mit ihrem Sauganschluß mit der Umgebung in Verbindung steht, wird insbesondere in Verbindung mit einem Luftpolster in den Mikropumpen selbst nur Luft gefördert, wobei die beiden Mikropumpen mit ihren jeweiligen Anschlüssen mit der Umgebung zum Ansaugen oder Abgeben von Luft in Verbindung stehen. Aufgrund ihres geringen Raumbedarfs lassen sich die Mikropumpen auch problemlos ohne Vergrößerung des Bauvolumens gegenüber herkömmlichen Hubkolbenpipetten unterbringen.

Die Mikropumpe kann piezoelektrisch, elektromagnetisch oder elektrostatisch angetrieben werden. Bei dem elektrostatischen Antrieb werden Abstoßungskräfte unterschiedlicher Ladungen genutzt.

In vorteilhafter Ausführung ist zwischen der Flüssigkeit in dem Pipettierkanal und der Pumpeinrichtung ein Luftpolster angeordnet, das einen Kontakt des zu fördernden Mediums mit den Mikropumpen verhindert. Die Mikropumpen werden nicht kontaminiert und bei Verwendung von Pipettierspitzen bleiben auch die Pipettierkanäle von dem zu fördernden Medium unberührt.

Weiterhin vorteilhaft weisen die saug- und druckseitigen Anschlüsse der Mikropumpen Rückschlagventile auf, um die jeweils gegenläufige Fließrichtung in beiden Mikropumpen zu erzwingen.

In bevorzugter Ausführung sind die beiden Mikropumpen unabhängig voneinander aktivierbar, so daß das von der einen Mikropumpe angesaugte Volumen des Mediums von dem Volumen, das von der anderen Mikropumpe dosiert abgegeben wird, nicht identisch sein muß. Es lassen sich folglich bei einem einzigen Saughub mehrere Pipettiervorgänge nacheinander durchführen.

In weiterhin vorteilhafter Ausführung ist jeweils nur einer der mit dem Pipettierkanal in Verbindung stehenden Anschlüsse geöffnet, während der zweite in dieser Zeit geschlossen bleibt. Dadurch wird verhindert, daß Luft in die passive Pumpe einströmt oder aus dessen Pumpkammer angesaugt wird, da dies die dosierte Förderung beeinträchtigen würde.

Weiterhin weisen die zwei Mikropumpen mit Vorteil jeweils einen konstanten Hub auf, so daß beide Mikropumpen ein definiertes Pumpvolumen aufweisen und das geförderte bzw. abgegebene Volumen über die Anzahl der Hübe definiert ist.

Bei Dosiervorrichtungen mit mehreren Pipettierkanälen, beispielsweise für den Einsatz in Verbindung mit Titerplatten, ist vorzugsweise jedem Pipettierkanal eine Pumpeinrichtung zugeordnet. Damit ist die Möglichkeit gegeben, das Fördervolumen an jedem einzelnen Pipettierkanal unabhängig zu definieren und somit beispielsweise Reihenversuche mit unterschiedlichen Titriervolumina in einem Arbeitsschritt durchzuführen.

Mit Vorteil sind die Mikropumpen als Membranpumpen ausgebildet, da sie einen minimalen Platzbedarf bei größter Funktionssicherheit aufweisen. Die Membran kann aus gummielastischen Werkstoffen, z.B. Polymeren, aber auch aus metallischen oder keramischen Werkstoffen bestehen.

In bevorzugter Ausführung weist die Dosiervorrichtung eine elektronische Steuereinrichtung zur Betätigung des elektrischen Antriebs jeder Mikropumpe auf, mit der einerseits die jeweils zwei einem Pipettierkanal zugeordneten Mikropumpen kontrolliert, andererseits die Mikropumpen verschiedener Pipettierkanäle unabhängig voneinander betätigt werden können.

Nachstehend ist die Erfindung anhand eines Ausführungsbeispiels beschrieben.

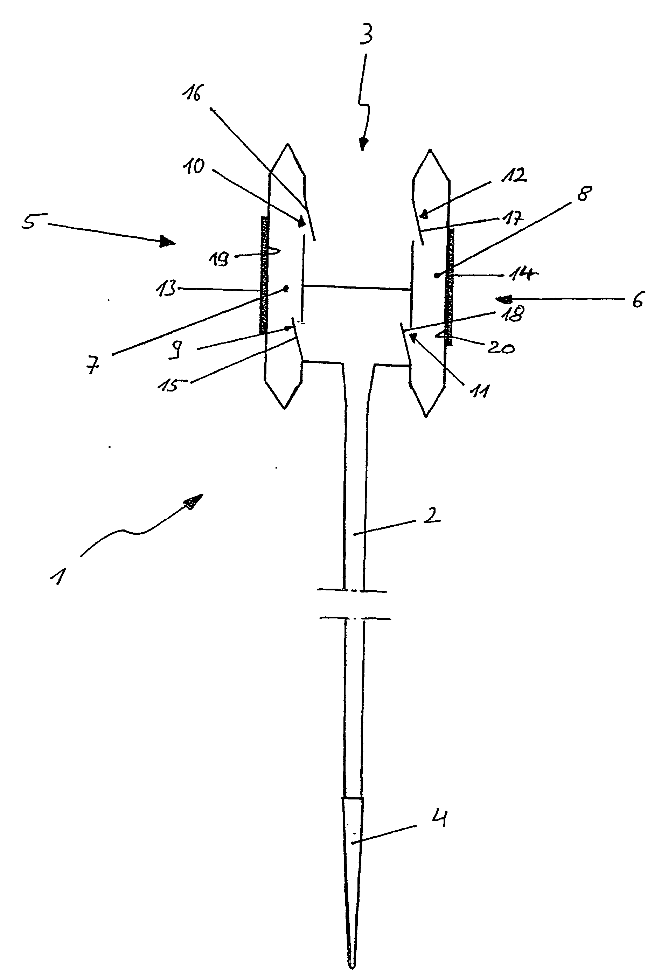

Die Zeichnung zeigt schematisch eine Pipettiervorrichtung 1, bestehend aus einem Pipettierkanal 2 und einer Pumpeinrichtung 3. Auf das untere Ende des Pipettierkanals 2 ist eine Pipettierspitze 4 abnehmbar aufgesteckt.

In dem Pipettierkanal 2 sowie der Pumpeinrichtung 3 befindet sich Luft. Das anzusaugende und zu dosierende Medium nur mit der Pipettierspitze 4 in Berührung kommt. Bei einem Austausch der Pipettierspitze 4 ist die Pipettiervorrichtung 1 ohne weitere Reinigung sofort wieder für andere Medien einsatzbereit.

Die Pumpeinrichtung 3 besteht aus einer ersten Mikropumpe 5 und einer zweiten Mikropumpe 6. Die beiden Mikropumpen 5 und 6 weisen jeweils eine Pumpkammer 7, 8 und jeweils einen saugseitigen Anschluß 9,12 und jeweils einen druckseitigen Anschluß 10,11 auf. Die Anschlüsse 9,10,11,12 sind mit einfachen Ventilklappen 15,16,17,18 rückschlaggesichert. Die Mikropumpen 5 und 6 stehen mit jeweils einem Anschluß 9,11 mit dem Pipettierkanal 2 und mit ihrem jeweils zweiten Anschluß 10, 12 mit der Umgebung in Verbindung. So ist die Mikropumpe 5 saugseitig an den Pipettierkanal 2 angeschlossen und steht druckseitig mit der Umgebung in Verbindung, während die andere Mikropumpe 6 druckseitig mit dem Pipettierkanal 2 und saugseitig mit der Umgebung in Verbindung steht.

Bei dem gezeigten Ausführungsbeispiel sind die Mikropumpen 5,6 als Membranpumpen mit je einer Membran 19,20 aus einem starren Werkstoff ausgebildet. Die Membranen 19,20 sind unmittelbar mit je einem Piezoaktor 13 bzw. 14 verbunden.

Beim Ansaugen des zu dosierenden Mediums in die Pipettierspitze 4 wird ein piezoelektrischer Aktor 13 der Mikropumpe 5 über eine nicht dargestellte Steuerungselektronik so angesteuert, daß sich das Volumen der Pumpkammer 7 vergrößert, Luft aus dem Pipettierkanal 2 bei geöffnetem Anschluß 9 und geschlossenem Anschluß 10 in die Pumpkammer 7 der Mikropumpe 5 gesaugt wird und durch den im Pipettierkanal 2 entstehenden Unterdruck das zu fördernde Medium in die Pipettierspitze 4 eintritt. Gleichzeitig wird ein piezoelektrischer Aktor 14 der Mikropumpe 6 so betätigt, daß sich das Volumen der Pumpkammer 8 vergrößert, der druckseitige Anschluß 11 geschlossen bleibt und Umgebungsluft durch den saugseitigen Anschluß 12 in die Pumpkammer 8 strömt. Der Hub des Aktors 13 kann elektronisch so gesteuert werden, daß ein frei festlegbares Volumen angesaugt wird. Durch Einstellung der Hubzahl kann das Gesamtvolumen für einen Dosiervorgang variiert werden.

Beim Abgeben des Fördermediums werden die beiden Aktoren 13 und 14 so betätigt, daß sich die Volumina der Pumpkammer 7 und 8 verringern, wobei aus der Pumpkammer 7 der Mikropumpe 5 Luft über den druckseitigen Anschluß 10 abgegeben wird und der saugseitige Anschluß 9 geschlossen ist. Die Luft aus der Pumpkammer 8 der Mikropumpe 6 wird über den druckseitigen Anschluß 11 der Mikropumpe 6 in den Pipettierkanal 2 gedrückt. Dabei wird das in der Pipettierspitze 4 befindliche Medium entsprechend dem Hubvolumen der Mikropumpe 6, gegebenenfalls mehrfach entsprechend der eingestellten Hubzahl, abgegeben.

Um ein ungewolltes Überströmen des Pumpvolumens von einer in die andere Mikropumpe zu vermeiden, muß das Hohlraumvolumen zwischen den beiden Mikropumpen entsprechend ausgelegt werden. Gegebenenfalls kann der Antrieb der nicht arbeitenden Pumpe beim Arbeitstakt der anderen Pumpe umgekehrt werden, um einen Verschluß der Ventilklappen zu gewährleisten.

## Patentansprüche

1. Pipettiervorrichtung mit zumindest einem Pipettierkanal und mit zumindest einer mit dem Pipettierkanal zusammenwirkenden Pumpeinrichtung zum Ansaugen und dosierten Abgeben von Flüssigkeit, wobei die Pumpeinrichtung (3) aus zwei elektrisch betriebenen Mikropumpen (5,6) mit jeweils einem saugseitigen Anschluß (9, 12) und einem druckseitigen Anschluß (10, 11) besteht **dadurch gekennzeichnet**, die eine Mikropumpe (5) saugseitig mit dem Pipettierkanal (2) und druckseitig mit der Umgebung in. Verbindung steht, während die andere Mikropumpe (6) druckseitig mit dem Pipettierkanal (2) und saugseitig mit der Umgebung in Verbindung steht.

2. Pipettiervorrichtung nach Anspruch 1, **dadurch gekennzeichnet, daß** zwischen der Flüssigkeit in dem Pipettierkanal (2) und der Pumpeinrichtung (3) ein Luftpolster vorgesehen ist.

3. Pipettiervorrichtung nach Anspruch 1 oder 2, **dadurch gekennzeichnet, daß** die druck- und saugseitigen Anschlüsse (9-12) der beiden Mikropumpen (5, 6) Rückschlagventile (15-18) aufweisen.

4. Pipettiervorrichtung nach einem der Ansprüche 1 bis 3, **dadurch gekennzeichnet, daß** die zwei Mikropumpen (5, 6) unabhängig voneinander aktivierbar sind.

5. Pipettiervorrichtung nach einem der Ansprüche 1 bis 4, **dadurch gekennzeichnet, daß** jeweils nur einer der mit dem Pipettierkanal (2) in Verbindung stehenden Anschlüsse (9, 11) geöffnet ist.

6. Pipettiervorrichtung nach einem der Ansprüche 1 bis 5, **dadurch gekennzeichnet, daß** die zwei Mikropumpen (5, 6) zur Förderung unterschiedlicher Volumina steuerbar sind.

7. Pipettiervorrichtung nach einem der Ansprüche 1 bis 6, **dadurch gekennzeichnet, daß** jedem Pipettierkanal (2) der Pipettiervorrichtung eine Pumpeinrichtung (3) zugeordnet ist.

8. Pipettiervorrichtung nach einem der Ansprüche 1 bis 7, **dadurch gekennzeichnet, daß** die zwei Mikropumpen (5, 6) Membranpumpen sind.

9. Pipettiervorrichtung nach Anspruch 8, **dadurch gekennzeichnet, daß** die Membranpumpen jeweils einen Piezoaktor aufweisen.

10. Pipettiervorrichtung nach einem der Ansprüche 1 bis 9, **dadurch gekennzeichnet, daß** die Mikropumpen (5, 6) eine elektronische Ansteuerung aufweisen.

## Claims

1. A pipette device comprising at least one pipette channel and at least one pump arrangement cooperating with said pipette channel for suctioning and meteredly dispensing liquid, the pump arrangement (3) comprising two electrically operated micropumps (5, 6) each of which having a suction-side connection (9, 12) and a pressure-side connection (10, 11), **characterised in that** the one (5) of the micropumps is connected to the pipette channel (2) at the suction-side and to the environment at the pressure-side whereas the other (6) of the micropumps is connected to the pipette channel (2) at the pressure-side and to the environment at the suction-side.

2. A pipette device as claimed in claim 1, **characterised in that** an air cushion is disposed between liquid in the pipette channel (2) and the pump arrangement (3).

3. A pipette device as claimed in claim 1 or 2, **characterised in that** the suction-side and the pressure-side connections (9-12) of the two micropumps (5,6) are provided with a check valve (15-18), respectively.

4. A pipette device as claimed in any one of claim 1 to 3, **characterised in that** the two micropumps (5, 6) are activatable independently from each other.

5. A pipette devices as claimed in any one of claims 1 to 4, **characterised in that** only one of the connections (9, 11) being connected to the pipette channel (2), respectively, is open.

6. A pipette device as claimed in any one of claims 1 to 5, **characterised in that** the two micropumps (5, 6) are controllable to deliver different volumes.

7. A pipette device as claimed in any one of claims 1 to 6, **characterised in that** one pump arrangement (3) is associated with each pipette channel (3) of the pipette device, respectively.

8. A pipette device as claimed in any one of claims 1 to 7, **characterised in that** the two micropumps (5, 6) are diaphragm pumps.

9. A pipette device as claimed in claim 8, **characterised in that** each diaphragm pump comprises a piezo-actuator.

10. A pipette device as claimed in any one of claims 1 to 9, **characterised in that** the micropumps (5, 6) comprise an electronic control means.

## Revendications

1. Dispositif de pipettage comprenant au moins un canal de pipettage et au moins un dispositif de pompage coopérant avec le canal de pipettage pour l'aspiration et la délivrance dosée de liquide, le dispositif de pompage (3) consistant en deux micropompes (5, 6) à entraînement électrique présentant chacune un raccordement (9, 12) du côté admission et un raccordement (10, 11) du côté refoulement, **caractérisé en ce que** l'une (5) des micropompes est reliée côté admission au canal de pipettage (2) et côté refoulement à l'environnement, alors que l'autre micropompe (6) est reliée côté refoulement au canal de pipettage (2) et côté admission à l'environnement.

2. Dispositif de pipettage selon la revendication 1, **caractérisé en ce que** l'on prévoit un matelas d'air isolant entre le liquide dans le canal de pipetage (2) et le dispositif de pompage (3).

3. Dispositif de pipettage selon la revendication 1 ou 2, **caractérisé en ce que** les raccordements (9-12) du côté refoulement et du côté admission des deux micropompes (5, 6) présentent des clapets antiretour (15-18).

4. Dispositif de pipettage selon l'une quelconque des revendications 1 à 3, **caractérisé en ce que** les deux micropompes (5, 6) peuvent être activées indépendamment l'une de l'autre.

5. Dispositif de pipettage selon l'une quelconque des revendications 1 à 4, **caractérisé en ce qu'**à chaque fois un seul des raccordements (9, 11) reliés au canal de pipettage (2) est ouvert.

6. Dispositif de pipettage selon l'une quelconque des revendications 1 à 5, **caractérisé en ce que** les deux micropompes (5,6) peuvent être commandées pour transporter des volumes différents.

7. Dispositif de pipettage selon l'une quelconque des revendications 1 à 6, **caractérisé en ce que** chaque canal de pipettage (2) du dispositif de pipettage comporte un dispositif de pompage (3).

8. Dispositif de pipettage selon l'une quelconque des revendications 1 à 7, **caractérisé en ce que** les deux micropompes (5, 6) sont des pompes à diaphragme.

9. Dispositif de pipettage selon la revendication 8, **caractérisé en ce que** les pompes à diaphragme présentent chacune un actionneur piezoélectrique.

10. Dispositif de pipettage selon l'une quelconque des revendications 1 à 9, **caractérisé en ce que** les micropompes (5, 6) présentent une commande électronique d'amorçage.
